# EUROPÄISCHE PATENTANMELDUNG

(11) **EP 1 959 662 A1**
(43) Veröffentlichungstag der Anmeldung: **20.08.2008**
(21) Anmeldenummer: 08101658.6
(22) Anmeldetag: 15.02.2008
(51) Int. Cl.: H04N 1/00, H04N 1/32, G01S 1/00, H04M 1/725

(54) **Verfahren sowie mobiles elektronisches Endgerät zur Erzeugung von Daten mit Metadaten mit geographischen Angaben Richtungsangaben**

(30) Priorität: 19.02.2007 DE 102007008199
(71) Anmelder: Vodafone Holding GmbH, 40213 Düsseldorf (DE)
(72) Erfinder: Birle, Christian, 80799 München (DE)
(74) Vertreter: Müller, Thomas

(57) **Zusammenfassung**

Die vorliegende Erfindung betrifft ein Verfahren zur Erzeugung von Daten mit geographischem Bezug, sowie ein dafür ausgebildetes mobiles elektronisches Endgerät. Mittels einer im mobilen elektronischen Endgerät vorgesehenen Erzeugungseinrichtung werden zunächst Daten erzeugt. Mittels eines im mobilen elektronischen Endgerät vorgesehenen Messgerätes zur Bestimmung der Himmelsrichtung, insbesondere durch einen Magnetkompass, werden weiterhin auf die erzeugten Daten bezogene Richtungsdaten erzeugt. Zusätzlich können optional auch noch Standortdaten für das Endgerät erzeugt werden. Die erzeugten Daten, die Richtungsdaten und optional auch die Standortdaten werden verknüpft. Es wird eine Möglichkeit geschaffen, durch das Messgerät zur Bestimmung der Himmelsrichtung verlässliche Angaben über die Ausrichtung des Endgeräts zu machen. Durch die klare Erfassung der Himmelsrichtung kann nunmehr eine exakte Zuordnung über die xyz-Koordinate hinaus erfolgen.

## Beschreibung

Die vorliegende Erfindung betrifft zunächst ein Verfahren zur Erzeugung von Daten mit geographischem Bezug. Weiterhin betrifft die Erfindung ein mobiles elektronisches Endgerät.

Mit der zunehmenden Verbesserung und Diversifizierung mobiler elektronischer Endgeräte, beispielsweise von Mobiltelefonen, entsteht eine immer größer werdende Bandbreite an potentiellen Einsatzmöglichkeiten solcher mobiler Endgeräte.

Aus der DE 102 48 011 A1 ist bereits ein Verfahren zur ortsabhängigen mobilen Kommunikation bekannt geworden. Bei diesem Verfahren können Informationsdaten oder Nachrichten in Datenform an bestimmten Orten für andere Nutzer hinterlassen und zur Verfügung gestellt werden. Dazu werden zunächst erzeugte Informationsdaten oder Nachrichten mit dafür vorgesehenen Ortsdaten verknüpft. Hierbei kann es sich beispielsweise um Daten solcher Orte handeln, an welchen die Informationsdaten oder Nachrichten von einem Erzeuger aufgegeben wurden. Die Nachrichten oder Informationsdaten werden unter den Ortsdaten abgespeichert und können ab sofort anderen Nutzern zur Verfügung gestellt werden. Wenn ein Nutzer über ein mobiles Endgerät verfügt, dessen Position bestimmt werden kann, und wenn eine Übereinstimmung zwischen den Positionsdaten des Endgeräts und entsprechenden Ortsdaten von Informationsdaten oder Nachrichten festgestellt wird, können diese Informationsdaten oder Nachrichten dem Nutzer zur Verfügung gestellt werden, sobald sich dieser an dem betreffenden Ort aufhält.

Aus der DE 299 21 515 U1 ist weiterhin ein Mobiltelefon bekannt, bei dem durch Implementierung einer Sensoreinheit zusätzliche Funktionen bereitgestellt werden können. Beispielsweise kann diese Sensoreinheit einen Magnetfeldsensor aufweisen, so dass das Mobiltelefon als Kompass verwendbar ist. Die von der Sensoreinheit detektierten Größen werden auf der Anzeigeeinrichtung des Mobiltelefons angezeigt.

Mit der Implementierung von digitalen Kameras in Mobiltelefonen ist es weiterhin möglich geworden, mittels der Mobiltelefone digitale Fotos zu erzeugen, die mit einem geographischen Bezug versehen werden. Dazu werden die erzeugten Fotos mit zusätzlichen Daten verknüpft, die Angaben zum Ort der Aufnahme, zur Aufnahmezeit und dergleichen machen. Die Aufzeichnung solcher Geodaten kann beispielsweise mittele eines Standortermittlungsverfahrens für das mobile Endgerät, beispielsweise mittels eines satellitengestützten Standortermittlungsverfahrens, erfolgen. Dies wird auch als "Geo-Tagging" bezeichnet. Nachteilig bei den bisherigen "Geo-Tagging"-Verfahren ist jedoch, dass bei sehr langsamen, fast stationären Bewegungen, oder aber im stationären Betrieb des mobilen elektronischen Endgeräts Informationen über die Ausrichtung des Endgeräts oder aber einer im Endgerät implementierten Kamera nicht verlässlich abgreifbar sind.

Der vorliegenden Erfindung liegt daher die Aufgabe zugrunde, ein Verfahren zur Erzeugung von Daten mit geographischem Bezug sowie ein mobiles elektronisches Endgerät bereitzustellen, mit dem auch die Ausrichtung des elektronischen Endgeräts im Hinblick auf die durch das Endgerät erzeugten Daten berücksichtigt werden kann.

Diese Aufgabe wird erfindungsgemäß gelöst durch das Verfahren mit den Merkmalen gemäß dem unabhängigen Patentanspruch 1, das Verfahren mit den Merkmalen gemäß dem unabhängigen Patentanspruch 8 sowie das mobile elektronische Endgerät mit den Merkmalen gemäß dem unabhängigen Patentanspruch 13. Weitere Merkmale und Details der Erfindung ergeben sich aus den Unteransprüchen und der Beschreibung. Merkmale und Details, die im Zusammenhang mit einem der beiden erfindungsgemäßen Verfahrensaspekte beschrieben sind, gelten selbstverständlich jeweils auch im Zusammenhang mit dem jeweils anderen Verfahrensaspekt. Ebenso gelten Merkmale und Details, die im Zusammenhang mit den beiden erfindungsgemäßen Verfahrensaspekten beschrieben sind, jeweils auch im Zusammenhang mit dem erfindungsgemäßen mobilen elektronischen Endgerät, und umgekehrt.

Gemäß dem ersten Aspekt der Erfindung wird ein Verfahren zur Erzeugung von Daten mit geographischem Bezug in einem mobilen elektronischen Endgerät bereitgestellt, wobei dieses Verfahren aus Sicht des elektronischen Endgeräts greift. Demgemäß ist das Verfahren gekennzeichnet durch folgende, von dem mobilen elektronischen Endgerät durchgeführten Schritte:
a) Erzeugung der Daten mittels einer im mobilen elektronischen Endgerät vorgesehenen Erzeugungseinrichtung;
b) Erzeugen von auf die erzeugten Daten bezogenen Richtungsdaten mittels eines im mobilen elektronischen Endgerät vorgesehenen Messgerätes zur Bestimmung der Himmelsrichtung, insbesondere durch einen Magnetkompass;
c) Übertragen der erzeugten Daten und Richtungsdaten über eine dem mobilen elektronischen Endgerät zugeordnete Schnittstelle an eine zentrale Rechnereinheit.

Gemäß einem ersten Schritt des Verfahrens werden bestimmte Daten erzeugt. Dies geschieht unter Verwendung einer im mobilen elektronischen Endgerät vorgesehenen Erzeugungseinrichtung. Dabei ist die Erfindung natürlich nicht auf bestimmte Datentypen beschränkt. Diese ergeben sich vielmehr nach Art und Ausgestaltung der jeweiligen Erzeugungseinrichtung sowie des Endgeräts. Auch diesbezüglich ist die Erfindung nicht auf bestimmte Typen beschränkt. Beispielsweise kann vorgesehen sein, dass digitale Fotos mittels einer im Endgerät vorgesehenen Kamera erzeugt werden, dass Audiosignale mittels einer im Endgerät vorgesehenen Aufnahmevorrichtung, die ein Mikrophon aufweisen kann, erzeugt werden, oder dass Textdaten mittels einer Tastatur erzeugt werden. Selbstverständlich ist die Erfindung nicht auf die genannten Beispiele beschränkt.

Besonders vorteilhaft kann die Erzeugungseinrichtung als Kamera ausgebildet sein, wobei die Daten in Form von Bilddaten erzeugt werden. In anderer Ausgestaltung kann die Erzeugungseinrichtung vorteilhaft als Aufnahmeeinrichtung mit Mikrofon ausgebildet sein, wobei die Daten in Form von Akustikdaten erzeugt werden.

In einem weiteren Schritt werden Richtungsdaten erzeugt, die auf die erzeugten Daten bezogen sind. Dies geschieht mittels eines im mobilen elektronischen Endgerät vorgesehenen Messgerätes zur Bestimmung der Himmelsrichtung. Auch bezüglich dieses Messgeräts ist die Erfindung nicht auf bestimmte Ausführungsvarianten beschränkt. Vorteilhaft kann es sich bei dem Messgerät jedoch um einen Kompass handeln, beispielsweise einen Magnetkompass, einen digitalen Kompass, einen Kreiselkompass, oder dergleichen.

Anschließend werden die erzeugten Daten und Richtungsdaten über eine dem mobilen elektronischen Endgerät zugeordnete Schnittstelle an eine zentrale Rechnereinheit übertragen. Die Übertragung erfolgt dabei nach den Grundlagen des jeweiligen Netzes, insbesondere Kommunikationsnetzes, in dem sich das Endgerät und die zentrale Rechnereinheit befinden. Wenn das mobile Endgerät beispielsweise als Mobiltelefon ausgebildet ist, handelt es sich bei dem Kommunikationsnetz um ein Telekommunikationsnetz, insbesondere ein Mobilfunknetz. Je nach Ausgestaltung des Endgeräts kann die Übertragung beispielsweise auch über das Internet erfolgen.

Durch das erfindungsgemäße Verfahren wird eine Möglichkeit geschaffen, über das Messgerät zur Bestimmung der Himmelsrichtung verlässliche Angaben über die Ausrichtung des Endgeräts zu erhalten. Durch die klare Erfassung der Himmelsrichtung kann nunmehr eine exakte Zuordnung über die xyz-Koordinate hinaus erfolgen.

Wenn das elektronische Endgerät beispielsweise als Mobiltelefon mit integrierter Kamera ausgestaltet ist, können mit diesem Mobiltelefon aufgenommene Fotos, beispielsweise Panoramaaufnahmen, durch die verlässliche Ausrichtung mittels des Messgeräts zur Bestimmung der Himmelsrichtung nunmehr eindeutig Karten, beispielsweise auch dreidimensionalen Karten, zugeordnet werden. Insbesondere kann das erfindungsgemäße Verfahren auch zur sauberen Verlinkung von Einzelaufnahmen, etwa für eine 360-Grad-Fotoaufnahme, verwendet werden.

Vorzugsweise kann vorgesehen sein, dass von auf die erzeugten Daten bezogene Standortdaten mittels einer im mobilen elektronischen Endgerät vorgesehenen Standortermittlungseinrichtung erzeugt werden. Wie dies im Einzelnen geschehen kann, wird weiter unten anhand einiger vorteilhafter, jedoch nicht ausschließlicher Beispiele näher erläutert. Die erzeugten Standortdaten werden dann vorteilhaft über die dem mobilen elektronischen Endgerät zugeordnete Schnittstelle an die zentrale Rechnereinheit übertragen.

Vorteilhaft werden die Daten und die Richtungsdaten - und optional die Standortdaten - vor der Übertragung an die zentrale Rechnereinheit in dem mobilen elektronischen Endgerät miteinander verknüpft. Auf diese Weise ist eine sichere Verbindung zwischen den einzelnen Daten gewährleistet, was insbesondere für deren weitere Verarbeitung, etwa in der wie weiter oben beschriebenen Weise, von Nutzen ist.

Der Standort des elektronischen Endgeräts kann beispielsweise über ein geeignetes Standort-Ermittlungsverfahren ermittelt werden. Vorzugsweise können die Standortdaten mittels eines GSM basierten Standort-Ermittlungsverfahrens und/oder mittels eines auf Satellitenortung basierenden Standort-Ermittlungsverfahrens (etwa GPS oder dergleichen) ermittelt werden. Die Kommunikation zwischen dem mobilen elektronischen Endgerät und der zentralen Rechnereinheit kann beispielsweise via zellularem Mobilfunk (etwa GPRS, UMTS oder dergleichen) erfolgen.

Zur Ortung mobiler Endgeräte über bestimmte Standort-Ermittlungsverfahren sind bereits verschiedene Lösungen bekannt geworden. So ist in der DE 198 03 960, deren Offenbarungsgehalt insoweit in die Beschreibung der vorliegenden Erfindung mit einbezogen wird, ein Verfahren und System zur Benutzung von modernen Ortungssystemen in Mobilfunksystemen beschrieben. Die Ortung eines Mobiltelefons kann beispielsweise auch nach dem so genannten EOTD-Verfahren (Enhanced Observed Time Difference) erfolgen. Dabei werden Laufzeitunterschiede von Signalen eines Mobiltelefons zu mehreren Sendern gemessen. Aus den ermittelten Werten kann dann unter Verwendung geeigneter Algorithmen automatisch der Standort des Mobiltelefons ermittelt werden.

Besonders bevorzugt ist es jedoch, wenn die von auf die erzeugten Daten bezogenen Standortdaten über ein satellitengestütztes Standortermittlungsverfahren erzeugt werden.

Vorteilhaft können die Richtungsdaten und/oder Standortdaten als Metadaten mit den erzeugten Daten verknüpft werden. Unter Metadaten ("Daten über Daten") werden im vorliegenden Fall generell strukturierte Daten verstanden, mittels derer andere Daten, im vorliegenden Fall die vom mobilen elektronischen Endgerät erzeugten Daten, beschrieben werden. Metadaten liefern also Grundinformationen über die erzeugten Daten, im vorliegenden Fall also Informationen über den auf die erzeugten Daten bezogenen Standort oder die Richtung.

Gemäß einem zweiten Aspekt der Erfindung wird ein Verfahren zur Erzeugung von Daten mit geographischem Bezug in einer zentralen Rechnereinheit eines Portals eines Kommunikationsnetzes bereitgestellt, wobei dem Kommunikationsnetz eine Anzahl mobiler elektronischer Endgeräte zugeordnet ist, und wobei das Verfahren aus Sicht der zentralen Rechnereinheit greift. Das Verfahren ist erfindungsgemäß gekennzeichnet durch folgende, von der zentralen Rechnereinheit durchgeführte Schritte:
a) Empfangen von Daten, die in einem mobilen elektronischen Endgerät erzeugt worden sind;
b) Empfangen von auf die erzeugten Daten bezogenen Richtungsdaten, die mittels eines im mobilen elektronischen Endgerät vorgesehenen Messgerätes zur Bestimmung der Himmelsrichtung, insbesondere durch einen Magnetkompass, erzeugt worden sind;
c) Bereitstellen der Daten und der Richtungsdaten in Form von verknüpften Daten mit geographischem Bezug.

Zu den Vorteilen, Merkmalen, Wirkungen sowie der Funktionsweise des Verfahrens wird ebenfalls auf die weiter oben stehenden Ausführungen zum ersten erfindungsgemäßen Verfahrensaspekt vollinhaltlich Bezug genommen und hiermit verwiesen.

Zunächst empfängt die zentrale Rechnereinheit Daten, die in einem mobilen elektronischen Endgerät erzeugt worden sind. Dies kann in der wie weiter oben beschriebenen Weise geschehen.

Weiterhin empfängt die zentrale Rechnereinheit von auf die erzeugten Daten bezogene Richtungsdaten, die mittels eines im mobilen elektronischen Endgerät vorgesehenen Messgerätes zur Bestimmung der Himmelsrichtung, insbesondere durch einen Magnetkompass, erzeugt worden sind. Auch dies kann vorteilhaft in der wie weiter oben beschriebenen Art und Weise erfolgen.

Anschließend werden die Daten und die Richtungsdaten in Form von verknüpften Daten mit geographischem Bezug dargestellt. Auch diesbezüglich wird auf die weiter oben stehenden Ausführungen verwiesen.

Vorteilhaft kann vorgesehen sein, dass von auf die erzeugten Daten bezogene Standortdaten, die mittels einer im mobilen elektronischen Endgerät vorgesehenen Standortermittlungseinrichtung erzeugt worden sind, von der zentralen Rechnereinheit empfangen werden und dass Standortdaten in Form von verknüpften Daten mit geographischem Bezug bereitgestellt werden. In anderer Ausgestaltung kann vorgesehen sein, dass die Standortdaten für das elektronische Endgerät von der zentralen Rechnereinheit netzseitig ermittelt werden. In diesem Fall werden von dem Endgerät die erzeugten Daten sowie die daugehörigen Richtungsdaten erzeugt. Der Standort des Endgeräts wird von der zentralen Rechnereinheit bestimmt - etwa im Zusammenhang mit dem weiter oben beschriebenen EOTD-Verfahren. Anschließend werden alle Daten in der zentralen Rechnereinheit zu einem Datenpaket verknüpft.

Insbesondere kann vorgesehen sein, dass die Daten und die Richtungsdaten - und optional die Standortdaten - nach dem Empfang in der zentralen Rechnereinheit und vor der Bereitstellung von verknüpften Daten mit geographischem Bezug in der zentralen Rechnereinheit verknüpft werden. In anderer Ausgestaltung kann vorgesehen sein, dass die Verknüpfung bereits im mobilen elektronischen Endgerät erfolgt, und dass dann ein entsprechend gebündeltes Datenpaket zur zentralen Rechnereinheit übertragen wird.

Wie weiter oben bereits ausgeführt wurde, kann vorteilhaft vorgesehen sein, wenn die vom mobilen elektronischen Endgerät erzeugten Daten in Form von Bilddaten und/oder Akustikdaten von der zentralen Rechnereinheit empfangen werden.

Die verknüpften Daten mit geographischem Bezug werden vorzugsweise von der zentralen Rechnereinheit derart bereitgestellt, dass die Richtungsdaten und/oder Standortdaten in Form von Metadaten mit den vom mobilen elektronischen Endgerät erzeugten Daten verknüpft sind. Auch diesbezüglich wird auf die Ausführungen weiter oben Bezug genommen und verwiesen.

Gemäß einem dritten Aspekt der Erfindung wird ein mobiles elektronisches Endgerät bereitgestellt, mit einer Erzeugungseinrichtung zum Erzeugen von Daten, mit einem Messgerät zur Bestimmung der Himmelsrichtung, insbesondere einem Magnetkompass, zum Erzeugen von auf die erzeugten Daten bezogenen Richtungsdaten, mit einer Verknüpfungseinrichtung zum Verknüpfen der erzeugten Daten und der Richtungsdaten, und mit einer Schnittstelle zum Übertragen der Daten an eine zentrale Rechnereinheit - insbesondere eines Portals - eines Kommunikationsnetzes.

Zu den Vorteilen, Wirkungen und der Funktionsweise des elektronischen Endgeräts wird ebenfalls auf die Ausführungen zu den erfindungsgemäßen Verfahren weiter oben vollinhaltlich Bezug genommen und hiermit verwiesen.

Das mobile elektronische Endgerät gemäß der vorliegenden Erfindung ist insbesondere zur Durchführung der erfindungsgemäßen Verfahren ausgebildet und weist daher die erforderlichen Mittel zur Durchführung der erfindungsgemäßen Verfahren auf.

Vorteilhaft weist das mobile elektronische Endgerät eine Standortermittlungseinrichtung zur Ermittlung des Standortes des mobilen elektronischen Endgerätes in Form von Standortdaten auf, wobei in einem solchen Fall die Verknüpfungseinrichtung zur Verknüpfung der erzeugten Daten, der Richtungsdaten und der Standortdaten ausgebildet ist.

Vorzugsweise kann die Standortermittlungseinrichtung als satellitengestützte Standortermittlungseinrichtung ausgebildet sein, wobei natürlich auch die anderen weiter oben beschriebenen Ausgestaltungen realisiert werden können. In diesem Fall ist die Standortermittlungseinrichtung entsprechend ausgebildet.

Vorteilhaft kann die Erzeugungseinrichtung als Kamera und/oder als Aufnahmeeinrichtung mit Mikrofon und/oder als Tastatur ausgebildet sein.

Die vorliegende Erfindung ist nicht auf bestimmte Ausgestaltungen der elektronischen Endgeräte beschränkt. Diese sollen lediglich mobil sein. Somit kann es sich bei den elektronischen Endgeräten beispielsweise um transportable Computer, um so genannte PDA's (Personal Digital Assistent), um Mobiltelefone, um so genannte Smartphones, um digitale Kameras, und dergleichen handeln.

Mit der vorliegenden Erfindung wird es insbesondere möglich, erzeugte Daten, beispielsweise Fotografien oder andere Daten, die einen regionalen Bezug haben, um ein zusätzliches Informationsfeld, das so genannte Geo-Tagging, derart zu erweitern, dass neben den durch ein Standortermittlungsverfahren, beispielsweise GPS, zur Verfügung gestellten Informationen (Länge, Breite, Kurs, Geschwindigkeit) zusätzlich noch weitere Daten erfasst werden, nämlich Richtungsdaten. Diese können beispielsweise durch einen Kompass, etwa einen digitalen Kompass, einen Magnetkompass oder dergleichen, oder aber durch einen anderen Bewegungssensor erzeugt und bereitgestellt werden.

Die vorliegende Erfindung stellt gemäß einer bevorzugten Ausführungsform ein mobiles elektronisches Endgerät mit (digitaler) Kamerafunktion bereit, wobei das Endgerät um die Komponenten Standortermittlung (GPS/Galileo-Receiver) und Messgerät zur Bestimmung der Himmelsrichtung (digitaler Kompass) erweitert wurde. Somit ist nun auch eine Verknüpfung einer digitalen Aufnahme mit den von den beiden auf die Ermittlung der Richtung bezogenen Modulen erzeugten Informationen zur genauen Zuordnung der Aufnahme möglich. Die Verwendung der vorliegenden Erfindung kann vorteilhaft in mobilen Endgeräten (Handsets) mit integrierter Digitalkamera liegen. Die Darstellung der Ergebnisse kann über geeignete nachgeschaltete Dienste erfolgen.

Zusammengefasst betrifft die vorliegende Erfindung insbesondere ein Verfahren zur Erzeugung von Daten mit geographischem Bezug, sowie ein dafür ausgebildetes mobiles elektronisches Endgerät. Mittels einer im mobilen elektronischen Endgerät vorgesehenen Erzeugungseinrichtung werden zunächst Daten erzeugt. Mittels eines im mobilen elektronischen Endgerät vorgesehenen Messgerätes zur Bestimmung der Himmelsrichtung, insbesondere durch einen Magnetkompass, werden weiterhin auf die erzeugten Daten bezogene Richtungsdaten erzeugt. Zusätzlich können optional auch noch Standortdaten für das Endgerät erzeugt werden. Die erzeugten Daten, die Richtungsdaten und optional auch die Standortdaten werden verknüpft. Es wird eine Möglichkeit geschaffen, durch das Messgerät zur Bestimmung der Himmelsrichtung verlässliche Angaben über die Ausrichtung des Endgeräts zu machen. Durch die klare Erfassung der Himmelsrichtung kann nunmehr eine exakte Zuordnung über die xyz-Koordinate hinaus erfolgen.

## Patentansprüche

1. Verfahren zur Erzeugung von Daten mit geographischem Bezug in einem mobilen elektronischen Endgerät, **gekennzeichnet durch** folgende, von dem mobilen elektronischen Endgerät durchgeführten Schritte:
a) Erzeugung der Daten mittels einer im mobilen elektronischen Endgerät vorgesehenen Erzeugungseinrichtung;
b) Erzeugen von auf die erzeugten Daten bezogenen Richtungsdaten mittels eines im mobilen elektronischen Endgerät vorgesehenen Messgerätes zur Bestimmung der Himmelsrichtung, insbesondere **durch** einen Magnetkompass;
c) Übertragen der erzeugten Daten und Richtungsdaten über eine dem mobilen elektronischen Endgerät zugeordnete Schnittstelle an eine zentrale Rechnereinheit.

2. Verfahren nach Anspruch 1, **dadurch gekennzeichnet, dass** von auf die erzeugten Daten bezogene Standortdaten mittels einer im mobilen elektronischen Endgerät vorgesehenen Standortermittlungseinrichtung erzeugt werden und dass die erzeugten Standortdaten über die dem mobilen elektronischen Endgerät zugeordnete Schnittstelle an die zentrale Rechnereinheit übertragen werden.

3. Verfahren nach einem der Ansprüche 1 oder 2, **dadurch gekennzeichnet, dass** die Daten und die Richtungsdaten und optional die Standortdaten vor der Übertragung an die zentrale Rechnereinheit in dem mobilen elektronischen Endgerät miteinander verknüpft werden.

4. Verfahren nach einem der Ansprüche 2 oder 3, **dadurch gekennzeichnet, dass** die von auf die erzeugten Daten bezogenen Standortdaten über ein satellitengestütztes Standortermittlungsverfahren erzeugt werden.

5. Verfahren nach einem der Ansprüche 1 bis 4, **dadurch gekennzeichnet, dass** die Erzeugungseinrichtung als Kamera ausgebildet ist und dass die Daten in Form von Bilddaten erzeugt werden.

6. Verfahren nach einem der Ansprüche 1 bis 5, **dadurch gekennzeichnet, dass** die Erzeugungseinrichtung als Aufnahmeeinrichtung mit Mikrofon ausgebildet ist und dass die Daten in Form von Akustikdaten erzeugt werden.

7. Verfahren nach einem der Ansprüche 1 bis 6, **dadurch gekennzeichnet, dass** die Richtungsdaten und/oder Standortdaten als Metadaten mit den erzeugten Daten verknüpft werden.

8. Verfahren zur Erzeugung von Daten mit geographischem Bezug in einer zentralen Rechnereinheit eines Portals eines Kommunikationsnetzes, wobei dem Kommunikationsnetz eine Anzahl mobiler elektronischer Endgeräte zugeordnet ist, **gekennzeichnet durch** folgende, von der zentralen Rechnereinheit durchgeführte Schritte:
a) Empfangen von Daten, die in einem mobilen elektronischen Endgerät erzeugt worden sind;
b) Empfangen von auf die erzeugten Daten bezogenen Richtungsdaten, die mittels eines im mobilen elektronischen Endgerät vorgesehenen Messgerätes zur Bestimmung der Himmelsrichtung, insbesondere **durch** einen Magnetkompass, erzeugt worden sind;
c) Bereitstellen der Daten und der Richtungsdaten in Form von verknüpften Daten mit geographischem Bezug.

9. Verfahren nach Anspruch 8, **dadurch gekennzeichnet, dass** von auf die erzeugten Daten bezogene Standortdaten, die mittels einer im mobilen elektronischen Endgerät vorgesehenen Standortermittlungseinrichtung erzeugt worden sind, von der zentralen Rechnereinheit empfangen werden und dass Standortdaten in Form von verknüpften Daten mit geographischem Bezug bereitgestellt werden.

10. Verfahren nach Anspruch 8 oder 9, **dadurch gekennzeichnet, dass** die Daten und die Richtungsdaten und optional die Standortdaten nach dem Empfang in der zentralen Rechnereinheit und vor der Bereitstellung von verknüpften Daten mit geographischem Bezug in der zentralen Rechnereinheit verknüpft werden.

11. Verfahren nach einem der Ansprüche 8 bis 10, **dadurch gekennzeichnet, dass** die vom mobilen elektronischen Endgerät erzeugten Daten in Form von Bilddaten und/oder Akustikdaten empfangen werden.

12. Verfahren nach einem der Ansprüche 8 bis 11, **dadurch gekennzeichnet, dass** die verknüpften Daten mit geographischem Bezug von der zentralen Rechnereinheit derart bereitgestellt werden, dass die Richtungsdaten und/oder Standortdaten in Form von Metadaten mit den vom mobilen elektronischen Endgerät erzeugten Daten verknüpft sind.

13. Mobiles elektronisches Endgerät, mit einer Erzeugungseinrichtung zum Erzeugen von Daten, mit einem Messgerät zur Bestimmung der Himmelsrichtung, insbesondere einem Magnetkompass, zum Erzeugen von auf die erzeugten Daten bezogenen Richtungsdaten, mit einer Verknüpfungseinrichtung zum Verknüpfen der erzeugten Daten und der Richtungsdaten, und mit einer Schnittstelle zum Übertragen der Daten an eine zentrale Rechnereinheit eines Kommunikationsnetzes.

14. Mobiles elektronisches Endgerät nach Anspruch 13, **dadurch gekennzeichnet, dass** das mobile elektronische Endgerät eine Standortermittlungseinrichtung zur Ermittlung des Standortes des mobilen elektronischen Endgerätes in Form von Standortdaten aufweist, und dass die Verknüpfungseinrichtung zur Verknüpfung der erzeugten Daten, der Richtungsdaten und der Standortdaten ausgebildet ist.

15. Mobiles elektronisches Endgerät nach Anspruch 14, **dadurch gekennzeichnet, dass** die Standortermittlungseinrichtung als satellitengestützte Standortermittlungseinrichtung ausgebildet ist.

16. Mobiles elektronisches Endgerät nach einem der Ansprüche 13 bis 15, **dadurch gekennzeichnet, dass** die Erzeugungseinrichtung als Kamera und/oder als Mikrofon ausgebildet ist.
